**Europäisches Patentamt**

**European Patent Office**

**Office européen des brevets**

(19)

(11) Numéro de publication : **0 437 881 B1**

# (12) FASCICULE DE BREVET EUROPEEN

(45) Date de publication du fascicule du brevet :
**10.11.93 Bulletin 93/45**

(51) Int. Cl.⁵ : **B01J 20/20,** C01B 7/07

(21) Numéro de dépôt : **90203365.3**

(22) Date de dépôt : **17.12.90**

(54) **Procédé de prétraitement de charbon actif.**

(30) Priorité : **27.12.89 BE 8901407**

(43) Date de publication de la demande :
**24.07.91 Bulletin 91/30**

(45) Mention de la délivrance du brevet :
**10.11.93 Bulletin 93/45**

(84) Etats contractants désignés :
**AT BE CH DE DK ES FR GB GR IT LI LU NL SE**

(56) Documents cités :
**FR-A- 2 140 539**

(73) Titulaire : **SOLVAY (Société Anonyme)**
**Rue du Prince Albert, 33**
**B-1050 Bruxelles (BE)**

(72) Inventeur : **Vanlautem, Noel**
**Cité de la Taille 40**
**B-5190 Jemeppe-Sur-Sambre (BE)**

(74) Mandataire : **Marckx, Frieda et al**
**Solvay Département de la Propriété**
**Industrielle 310, rue de Ransbeek**
**B-1120 Bruxelles (BE)**

Jouve, 18, rue Saint-Denis, 75001 PARIS

## Description

La présente invention concerne un procédé de prétraitement de charbon actif en vue d'annihiler ses propriétés réductrices envers certains ions métalliques tels que les ions ferriques.

Il est connu par le document de Yu. N. Sychev paru dans Zhurnal Prikladnoi Khimii, Vol. 44, No. 8, pp. 1705-1710, août 1971 que le charbon actif présente des propriétés réductrices envers certains ions métalliques. Ces propriétés se manifestent notamment par la formation de chlorure ferreux ($FeCl_2$), lorsque l'on fait passer au travers du charbon actif des mélanges gazeux contenant du chlorure ferrique ($FeCl_3$).

Une telle formation de $FeCl_2$ n'est pas nécessairement avantageuse et peut dans certains procédés industriels, être franchement indésirable.

Ainsi dans certains cas comportant une séquence d'épuration avec une première étape d'adsorption des résidus "chlore" sur charbon actif, c'est-à-dire en pratique en vue d'éliminer le chlore libre et/ou les impuretés résiduaires organiques chlorées, suivie d'un traitement d'adsorption sur une colonne échangeuse anionique pour éliminer les traces de fer ferrique présentes dans le HCl, la formation de fer ferreux ($Fe^{++}$) doit être évitée du fait que les colonnes anioniques utilisées habituellement dans ce but, sont inefficaces vis-à-vis des sels ferreux. Par ailleurs l'absence de fer ferreux à la sortie de la colonne de charbon actif s'avère être particulièrement importante du fait que les colonnes anioniques sont extrêmement sensibles aux agents oxydants, ce qui exclut l'emploi de ceux-ci pour oxyder du fer ferreux éventuellement présent dans le milieu après l'étape d'adsorption sur du charbon actif non traité selon le procédé de la présente invention.

On a maintenant trouvé un procédé, qui par un prétraitement simple du charbon actif, permet de rendre celui-ci non réducteur et permet par voie de conséquence d'éviter la formation d'ions tels que $Fe^{++}$ à partir de mélanges contenant du fer sous forme $Fe^{+++}$ tout en maintenant les capacités d'adsorption ou d'absorption du charbon actif envers les impuretés "chlore".

A cet effet la présente invention concerne un procédé de prétraitement de charbon actif caractérisé en ce que l'on traite le charbon actif, préalablement à sa mise en oeuvre, avec une solution concentrée de sel de chlorure ferrique dans l'eau acidulée de pH inférieur ou égal à 3 jusqu'à disparition des propriétés réductrices du charbon actif envers les ions ferriques.

La présente invention s'opère habituellement avec une solution de $FeCl_3$ dans un acide protonique aqueux et de préférence au départ d'une solution aqueuse d'un acide protonique minéral. Tout particulièrement préférées dans ce contexte sont des solutions aqueuses d'acide chlorhydrique.

Lorsque l'on opère au départ d'une solution aqueuse d'acide chlorhydrique on travaille de préférence avec une concentration d'acide dans l'eau, égale ou supérieur à 10 % en poids. De préférence on opère avec des concentrations situées entre 20 et 35 % en poids. De bons résultats ont étés obtenus au départ d'une solution aqueuse contenant environ 28 % en poids d'acide chlorhydrique.

La concentration du $FeCl_3$ dans l'eau contenant l'acide protonique doit être choisie de façon à ce qu'après l'opération de prétraitement, le charbon actif ne soit plus réducteur par rapport au $FeCl_3$. Une telle concentration doit être déduite expérimentalement pour tout type de charbon actif que l'on désire mettre en oeuvre. D'une façon générale on peut toutefois affirmer que, pour obtenir ce résultat, il convient de mettre en oeuvre des solutions dont la concentration en $FeCl_3$ est au moins égale et de préférence supérieure à 3 g/l. De bons résultats ont été obtenus avec des solutions contenant plus de 5 g/l de $FeCl_3$ lorsque l'on travaille avec du charbon actif vendu par la société LURGI sous les marques HYDRAFIN 30 ET HYDRAFIN CC8/30.

Le prétraitement tel que défini dans la présente invention peut être effectué de toute façon qui permet de rendre non réducteur vis-à-vis des ions $Fe^{+++}$ le charbon actif. Ainsi le prétraitement peut consister notamment dans un passage au travers d'un lit fixe de charbon actif, d'une solution aqueuse acide contenant du $FeCl_3$ dans les concentrations définies ci-avant. Le prétraitement peut toutefois également être effectué dans d'autres conditions et peut consister notamment dans une mise en suspension, pendant une durée à déterminer expérimentalement, de charbon actif dans une solution concentrée de $FeCl_3$ dans l'eau acidifiée. Les conditions expérimentales, à mettre au point au coup par coup, dépendront évidemment de paramètres qui peuvent varier et qui ne sont pas vraiment essentiels pour la réalisation de l'invention, tels que, la nature du charbon actif ainsi que des traitements antérieurs qu'il a déjà éventuellement subis, la température de mise en oeuvre, la pression , l'état physique du milieu d'imprégnation, etc...

Le temps de contact entre le charbon actif et la solution concentrée de $FeCl_3$ dépend, pour obtenir le résultat escompté, quant à lui notamment de la nature du charbon actif, de la concentration et la quantité de solution de $FeCl_3$ mise en oeuvre.

La nature du charbon actif mis en oeuvre dans le présent procédé n'est pas critique pour la réalisation de celui-ci mais dépend de l'utilisation à laquelle il est finalement destiné. Il est toutefois évident que sa nature exacte peut influer sur la concentration et quantité de solution de $FeCl_3$ à mettre en oeuvre.

Enfin il est évident que la quantité de solution de $FeCl_3$ et par voie de conséquence la quantité de $FeCl_3$

2

EP 0 437 881 B1

fixée par gramme de charbon actif est un paramètre important pour la réalisation du procédé de l'invention. Toutefois il s'agit là d'un paramètre qu'il convient également de définir en fonction de la nature exacte du charbon actif mis en oeuvre. Pour ce qui concerne les charbons actifs HYDRAFIN 30 et HYDRAFIN CC8/30 mis en oeuvre selon les exemples de la présente invention, la quantité nécessaire de FeCl₃ pour rendre le charbon actif non réducteur est au minimum 3 g de FeCl₃/50 g de charbon actif, c'est-à-dire que le charbon actif doit fixer 60 g de FeCl₃/Kg de charbon actif pour obtenir les résultats particuliers observés. Cette quantité n'évolue pratiquement pas dans le temps et peut être déterminée par toute méthode physique ou chimique appropriée.

Il n'est toutefois pas nécessaire pour la réalisation de la présente invention, de connaître la quantité exacte de FeCl₃ fixée par le charbon actif. En effet, pour savoir si le charbon actif à été convenablement et suffisamment traité avec la solution concentrée de FeCl₃, il suffit d'en prendre un échantillon, de faire passer une quelconque solution contenant du FeCl₃, au travers de cet échantillon et d'en mesurer l'absorbance (i.e. le % d'absorption). En effet, comme le FeCl₃ est coloré et le FeCl₂ est incolore, la différence en absorbance entre l'éluat et la solution vierge est la mesure de la quantité de FeCl₂ formée. Il en résulte que, si l'absorbance de l'éluat est identique à l'absorbance de la solution vierge, il n'y a plus de formation de FeCl₂ et le procédé de prétraitement est terminé.

Outre sa propriété non réductrice du fer ferrique le charbon actif issu du prétraitement selon la présente invention conserve ses propriétés d'adsorption et d'absorption envers des impuretés chlorées inorganiques et organiques ce qui peut être mis à profit dans des applications d'épuration de composés issus de productions de type organique ou de type inorganique. Ainsi par exemple le charbon actif issu du prétraitement selon l'invention peut indifféremment être utilisé dans l'épuration de tout type d'acide chlorhydrique. Cet acide chlorhydrique peut être issu de procédés ne mettant en oeuvre que des composés inorganiques tels que ceux provenant de la chimie minérale comme par exemple issus de la chimie des terres rares. Cet acide chlorhydrique peut également être issu de procédés de traitement de composés organiques tels que des composés organiques chlorés.

Un procédé qui a donné de bons résultats consiste à mettre en oeuvre le charbon actif issu du prétraitement dans un procédé complet d'épuration de solutions d'acide chlorhydrique contenant des impuretés inorganiques comme le chlore moléculaire et des traces d'impuretés organiques comme le chloroforme, le perchloréthylène, l'hexachlorobutadiène, l'hexachloroéthane et l'hexachlorobenzène.

La présente invention est illustrée par les exemples ci-après.

Exemple IR (de comparaison)

Dans un flacon laveur ayant un diamètre interne de 36 mm on introduit 50,00 g de charbon actif (soit un garnissage sur une hauteur de 75 mm) vendu par la société LURGI sous la dénomination HYDRAFIN 30.

On fait passer au travers de ce charbon actif en continu une solution aqueuse de HCl à 28 % en poids contenant 2,06 g/l de FeCl₃ dissous. Le débit de cette solution est ajusté à 820 cm³/h et on prélève un échantillon de l'éluat après passage de 115 cm³ soit toutes les 7 min.

Sur cet échantillon on mesure par colorimétrie l'absorbance à la longueur d'onde de 480 millimicrons avec un colorimètre HACH DR3000 - programme 25. La solution de départ présente dans ces conditions une absorbance égale à 3,240.

Les résultats des mesures des différents échantillons sont reportés dans le tableau I ci-après.

3

TABLEAU I

| N°. éch. | abs. | N°. éch. | abs. | N°. éch. | abs. |
|---|---|---|---|---|---|
| 1 | 0,031 | 16 | 2,290 | 31 | 1,916 |
| 2 | 0,033 | 17 | 2,360 | 32 | 2,041 |
| 3 | 0,057 | 18 | 2,412 | 33 | 2,389 |
| 4 | 0,111 | 19 | 2,466 | 34 | 2,547 |
| 5 | 0,198 | 20 | 2,520 | 35 | 2,649 |
| 6 | 0,334 | 21 | 2,562 | 36 | 2,723 |
| 7 | 0,548 | 22 | 2,602 | 37 | 2,784 |
| 8 | 0,841 | 23 | 2,635 | 38 | 2,833 |
| 9 | 1,142 | 24 | 2,665 | 39 | 2,874 |
| 10 | 1,416 | 25 | 2,696 | 40 | 2,907 |
| 11 | 1,667 | 26 | 2,726 | 41 | 2,933 |
| 12 | 1,865 | 27 | 2,761 | 42 | 2,960 |
| 13 | 2,011 | 28 | 2,785 | 43 | 2,980 |
| 14 | 2,121 | 29 | 2,807 | 44 | 3,000 |
| 15 | 2,214 | 30 | 2,823 | 45 | 3,016 |

N°. éch. = Numéro de l'échantillon

abs.     = absorbance

Entre le prélèvement 30 et 31 un arrêt du débit a été maintenu pendant 16 heures.

Par ailleurs, après le prélèvement 45, un test à l'orthophénantroline confirme la persistance d'une faible concentration en $Fe^{++}$.

On peut donc voir qu'après passage de 45 x 115 cm³ soit 5.175 cm³ de la solution avec une concentration de 2,06 g/l de $FeCl_3$ le charbon actif présente toujours des propriétés réductrices envers les ions $Fe^{+++}$.

Exemple II (selon l'invention)

On répète l'exemple IR mais avec une solution concentrée de $FeCl_3$ de 7,55 g/l dans une solution de 28 % en poids d'HCl dans l'eau dont l'absorbance est égale à 5,600.

Les échantillons prélevés dans les mêmes conditions qu'à l'exemple IR présentent les absorbances reprises au Tableau II ci-après.

4

## TABLEAU II

| N°. éch. | abs. | N°. éch. | abs. |
|---|---|---|---|
| 1 | 0,522 | 4 | 5,281 |
| 2 | 2,170 | 5 | 5,600 |
| 3 | 4,173 | 6 | 5,600 |

Par ailleurs un test à l'orthophénantroline montre qu'à partir du prélèvement 6 il n'y a plus de présence de $Fe^{++}$.

On peut donc voir qu'après passage de 6 x 115 cm³ soit 690 cm³ d'une solution contenant une concentration de 7,55 g/l de $FeCl_3$ le charbon actif a perdu ses propriétés réductrices envers le $FeCl_3$ et cela malgré qu'au total il y a moins de $FeCl_3$ que dans l'échantillon IR avec lequel il a été mis en contact.

Exemple III (selon l'invention)

On immerge 200 g de charbon actif vendu par la société LURGI sous la dénomination HYDRAFIN 30 (essai 1) et HYDRAFIN CC8/30 (essai 2) pendant 60 heures dans HCl aqueux 28 % en poids à 250 g de $FeCl_3.6H_2O/l$ de solution. On laisse égouter le charbon actif et on le lave avec une solution de HCl aqueux de 28 % en poids jusqu'à égalité de la teneur en fer à l'entrée et à la sortie du laveur.

On mesure ensuite le niveau d'oxydation du fer contenu dans du HCl 28 % en poids après son passage sur du charbon actif traité ou non au $FeCl_3$. Les résultats de ces mesures sont reprises au tableau III ci-après.

## TABLEAU III

| | Ch. actif non traité | | Ch. actif traité | |
|---|---|---|---|---|
| | HYDRAFIN 30 | HYDRAFIN CC8/30 | HYDRAFIN 30 | HYDRAFIN CC8/30 |
| $Fe^{++}$ | 100 % | 100 % | non décelé | non décelé |
| $Fe^{+++}$ | traces | traces | 100 % | 100 % |

Ch. = charbon

On peut donc à nouveau déduire de ce tableau que la capacité réductrice des charbons actifs vis-à-vis du $Fe^{+++}$ est annihilée par le traitement à l'intervention d'une solution concentrée en $FeCl_3$.

En outre la fonction réductrice ne réapparaît pas après une utilisation prolongée du charbon actif ce qui est vérifié après lavage avec 100 l d'HCl 28 % en poids pour l'HYDRAFIN CC8/30 (essai 2) et avec 1.000 l de HCl 28 % en poids pour l'HYDRAFIN 30 (essai 1).

Exemple IV (selon l'invention)

ESSAI 1

Les charbons actifs issus des essais 1 et 2 de l'exemple III sont mis en oeuvre pour vérifier leur capacité d'adsorption ou d'absorption de chlore libre. Pour ce faire on fait passer sur les charbons actifs pendant 10 heures respectivement une solution d'HCl 28 % en poids contenant 25 mg/l de chlore dissous sur HYDRAFIN 30 et une solution d'HCl 28 % en poids contenant 30 mg/l de chlore dissous sur HYDRAFIN CC8/30.

Le tableau IV reprend les résultats observés.

## TABLEAU IV

| | Ch. actif HYDRAFIN 30 | Ch. actif HYDRAFIN CC8/30 |
|---|---|---|
| $Cl_2$ avant traitement du Ch. actif | 25 mg/1 | 30 mg/1 |
| $Cl_2$ après traitement du Ch. actif | non décelé | non décelé |

Ch. actif = charbon actif

ESSAI II

Les charbons actifs issus des essais 1 et 2 de l'exemple III sont mis en oeuvre pour tester leurs capacités d'adsorption ou d'absorption envers des matières organiques chlorés. Pour ce faire on fait passer au travers des charbons actifs respectivement des solutions aqueuses d'HCl 28 % en poids contenant du chloroforme, du perchloréthylène, de l'hexachlorobenzène, de l'hexachlorobutadiène et de l'hexachloréthane pour l'HYDRAFIN CC8/30 et contenant du chloroforme et du perchloréthylène pour l'HYDRAFIN 30.

Les résultats et teneurs de ces différents composés avant et après passage sur les charbons actifs sont repris au tableau V ci-après.

EP 0 437 881 B1

TABLEAU V

A. Essai sur charbon actif HYDRAFIN CC8/30

| mg/l | avant passage sur Ch. Act. | après passage sur Ch. Act. |
|------|------|------|
| CLM3 | 12–13        moy. = 13 | 4,2–5,0        moy. = 4,6 |
| PER | 5,7–4,1     moy. = 4,9 | 0,9–<0,1        moy. = 0,5 |
| HCBu | 0,03–0,05   moy. = 0,04 | <0,01–<0,01    moy. = <0,01 |
| HCEa | saturé–      moy. = >4,4 <br> 4,4 | <0,01–<0,01    moy. = <0,01 |
| HCBz | 0,01–0,03   moy. = 0,02 | <0,01–<0,01    moy. = <0,01 |

B. Essai sur charbon actif HYDRAFIN CC8/30

| mg/l | avant passage sur Ch. Act. | après passage sur Ch. Act. |
|------|------|------|
| CLM3 | 4,6 | < 0,1 |
| PER | 2,3 | < 0,1 |

légendes :

| | |
|---|---|
| Ch. Act. | = Charbon actif |
| ClM3 | = chloroforme |
| PER | = perchloréthylène |
| HCBu | = hexachlorobutadiène |
| HCEa | = hexachloréthane |
| HCBz | = hexachlorobenzène |
| moy. | = moyenne |

**Revendications**

1. Procédé de prétraitement de charbon actif caractérisé en ce que l'on traite le charbon actif, préalablement à sa mise en oeuvre, avec une solution concentrée de sel de chlorure ferrique dans l'eau acidulée de pH inférieur ou égal à 3 jusqu'à disparition des propriétés réductrices du charbon actif envers les ions ferriques.

7

2. Procédé selon la revendication 1 caractérisé en ce que l'on opère avec une solution concentrée dans de l'acide chlorhydrique à 28 % en poids dans l'eau.

3. Procédé selon les revendications 1 ou 2 caractérisé en ce que la concentration du $FeCl_3$ est au moins égale à 3 g/l.

4. Procédé selon la revendication 3 caractérisé en ce que la concentration en $FeCl_3$ est d'au moins 5 g/l.

5. Procédé pour épurer des solutions d'acide chlorhydrique caractérisé en ce que l'on met en oeuvre du charbon actif issu d'un prétraitement avec une solution concentrée de sel de chlorure ferrique dans l'eau acidulée de pH inférieur ou égal à 3 jusqu'à disparition des propriétés réductrices du charbon actif envers les ions ferriques.

## Claims

1. Process for the pretreatment of activated carbon, characterised in that, before being used, the activated carbon is treated with a concentrated solution of ferric chloride salt in acidified water with a pH lower than or equal to 3 until the reducing properties of the activated carbon towards ferric ions have disappeared.

2. Process according to Claim 1, characterised in that the operation is performed with a concentrated solution in hydrochloric acid at a concentration of 28 % by weight in water.

3. Process according to Claims 1 or 2, characterised in that the concentration of $FeCl_3$ is at least equal to 3 g/l.

4. Process according to Claim 3, characterised in that the concentration of $FeCl_3$ is at least 5 g/l.

5. Process for the purification of hydrochloric acid solutions, characterised in that the activated carbon used originates from a pretreatment with a concentrated solution of ferric chloride salt in acidified water with a pH lower than or equal to 3 until the reducing properties of the activated carbon towards ferric ions have disappeared.

## Patentansprüche

1. Verfahren zur Vorbehandlung von Aktivkohle, dadurch gekennzeichnet, daß man die Aktivkohle vor ihrem Einsatz mit einer konzentrierten Lösung von Ferrichloridsalz in angesäuertem Wasser mit einem pH kleiner oder gleich 3 bis zum Verschwinden der reduzierenden Eigenschaften der Aktivkohle gegenüber den Ferriionen behandelt.

2. Verfahren nach Anspruch 1, dadurch gekennzeichnet, daß man mit einer konzentrierten Lösung in Salzsäure von 28 Gew.-% in Wasser arbeitet.

3. Verfahren gemäß Anspruch 1 oder 2, dadurch gekennzeichnet, daß die Konzentration des $FeCl_3$ wenigstens gleich 3 g/l ist.

4. Verfahren gemäß Anspruch 3, dadurch gekennzeichnet, daß die Konzentration an $FeCl_3$ wenigstens gleich 5 g/l ist.

5. Verfahren zum Reinigen von Salzsäurelösungen, dadurch gekennzeichnet, daß man Aktivkohle einsetzt, die aus einer Vorbehandlung mit einer konzentrierten Lösung von Ferrichloridsalz in angesäuertem Wasser mit einem pH kleiner oder gleich 3 bis zum Verschwinden der reduzierenden Eigenschaften der Aktivkohle gegenüber den Ferriionen stammt.